# EUROPEAN PATENT SPECIFICATION

(11) **EP 3 174 141 B1**
(45) Date of publication and mention of the grant of the patent: **19.06.2019**
(21) Application number: 15824274.3
(22) Date of filing: 24.07.2015
(51) Int. Cl.: B01J 23/30, B01J 23/652, B01J 23/888, B01J 37/06, B01J 37/08, B01J 37/10, C01G 41/02, H01G 11/46, H01M 4/48, H01M 4/90, H01M 8/1246, H01M 8/124

(54) **PROCESS FOR PRODUCING A DOPED TUNGSTEN OXIDE MATERIAL**
VERFAHREN ZUR HERSTELLUNG EINES DOTIERTEN WOLFRAMOXID-MATERIALS
PROCÉDÉ DE PRÉPARATION D'UN MATÉRIAU OXYDE DE TUNGSTÈNE DOPÉ

(30) Priority: 25.07.2014 CN 201410356583
(43) Date of publication of application: 31.05.2017
(73) Proprietor: Suzhou Hans Energy Storage Technology Co. Ltd., Suzhou, Jiangsu 215163 (CN)
(72) Inventor: ZHANG, Yuhong, Suzhou Jiangsu 215163 (CN)
(74) Representative: Lambsdorff & Lange Patentanwälte Partnerschaft mbB
(86) International application number: PCT/CN2015/084998
(87) International publication number: WO 2016/011970

(56) References cited:
- WO-A1-01/20695
- WO-A1-2013/146194
- WO-A1-2015/054974
- CN-A- 1 344 671
- CN-A- 1 657 422
- CN-A- 1 725 536
- CN-A- 101 240 164
- CN-A- 101 407 339
- CN-A- 101 805 244
- CN-A- 101 834 290
- CN-A- 102 561 007
- CN-A- 103 011 293
- CN-A- 103 936 074
- GB-A- 1 603 154
- JP-A- 2002 063 942
- JP-A- 2010 280 551
- JP-A- 2011 142 049
- KR-B1- 100 724 814
- US-A- 5 494 762
- US-A1- 2006 141 316
- US-A1- 2013 244 092
- H. ZHENG ET AL: "Nanostructured Tungsten Oxide - Properties, Synthesis, and Applications", ADVANCED FUNCTIONAL MATERIALS, vol. 21, no. 12, 21 June 2011 (2011-06-21) , pages 2175-2196, XP001563740, ISSN: 1616-301X, DOI: 10.1002/ADFM.201002477 [retrieved on 2011-05-24]

## Description

### Technical field

The present invention relates to tungsten oxide and its applications, including the material and its preparation methods thereof, its special properties, applications in the field of energy storage, catalysis and the like, and more particularly, to the field of chemistry, chemical engineering, material and energy industries.

### Technical background

From photosynthesis to electrochemical energy storage and conversion, energy conversion is achieved through the synergistic transfer of electrons and ions (such as protons, lithium ions, etc.). In this case, the mixed electron-ion conductors have a great potential, especially for high-power electrochemical device. At present, electrochemical energy storage devices with battery and electrochemical capacitors are widely used in portable electronic devices, and are rapidly expanding to electric vehicles, grid energy storage, renewable energy storage and so on. In such devices, the physical separation of the charge or chemical energy conversion is achieved through the electron and ion co-transfer, thereby realizing the energy storage and release. Materials with hybrid electron-ion conductivity have been widely used in many fields, such as solid oxide fuel cells, electrochromic materials, chemical sensors, gas separation and so on. However, the vast majority of hybrid electron-ion conductors are based on fluorides or perovskite ceramic materials operating at high temperature (e.g., greater than 500 degrees Celsius). At the same time, mixed electron-lithium ion conductors operating at room temperature, such as lithium cobalt oxide (LiCoO₂) and lithium manganese oxide (LiMn₂O₄), are widely used as electrode materials for lithium ion batteries. But in these materials, the conduction in the solid phase is often accompanied by the obvious phase transition behavior, which limits the dynamic characteristics of the material and operation lifetime. So the cycle life of common commercial lithium-ion battery is often limited to only a few hundred times. Although the electron-proton conductor materials at low temperature can be produced by simply mixing an electron conductive material (e.g., metal, carbon material, conductive polymer, conductive oxide, etc.) with a proton-conductive material (e.g. water, aqueous polymer, hydrated oxide), these materials themselves do not have charge storage capabilities and therefore cannot be used as energy storage materials. Although ruthenium oxide with a hydrated structure has high electron-proton conductivity at room temperature, as well as a high electrochemical capacitance (700 Faraday per gram), the high price limits its large-scale applications.

In general, electrodes of electrochemical energy storage devices such as batteries and electrochemical capacitors are formed by integrating a conductive material (graphite, carbon black, etc.), a redox active material (oxide, etc.), and a porous ion-conducting network. The porous network structure provides a transport channel for the electrolyte. However, the electronic and ionic conductivity of the electrode formed by such a simple mixture of a variety of material composition is not high, and the structure is also not stable enough. Therefore, the energy density, power density and cycle life of such energy storage devices are limited by the conductivity of the electrode, the ion mobility, the reversibility of the redox reaction, the side reactions, and so on. In order to achieve higher energy storage performance, the use of mixed electron - ion conductor directly as the electrode material will have a greater promise. This material can simultaneously provide redox capacity, high conductivity, fast ionic conductivity, and a stable structure, so that large capacity, high power, and long life can be achieved at the same time. In addition to being able to manufacture energy storage devices, hybrid electron-ion conductors also have other broad applications, such as catalysis, separation, and the like. However, so far it has been very difficult to design and manufacture such a material.

In fact, ion conduction is a very common phenomenon in nature. For example, many biological behaviors, such as photosynthesis, adenosine triphosphate synthesis, and the maintenance of biological tissue acidic environment all involve proton transport. In these processes, the proton conduction is achieved using their efficient proton channels. Such proton channel is prevalent in some specific protein structure, and they can be constructed by the internal single-stranded water structure. Gramicidin A, for example, is a widely studied simple proton polypeptide that can dimerize within the hydrophobic interior of the phospholipid bilayer of a cell to form a beta-helix structure that contains a single-stranded water channel, which can effectively conduct protons.

By mimicking the natural structure of the biomaterial, we designed and synthesized a novel hybrid electron-proton conductive material. Through controlling the growth of crystals during the synthesis process, we have prepared tungsten oxide materials with unique structures, which have internal continuous channels that can efficiently conduct protons. By performing simple doping, the tungsten oxide material can become a highly efficient electron conductor as well, thereby forming an electron-proton conductor having excellent properties. This material is used in electrochemical storage devices and shows excellent energy, power and cycling performance compared to conventional materials. Due to its special structure, it is expected that this tungsten oxide material can also be applied to other fields.

Document KR 100 724 814 B1 relates to an electrode composition including doped tungsten oxides and methods of preparation thereof.

Document US 2013/244092 A1 relates to an electrode material for a battery, an electrode material paste for a battery, and a solar cell using same, a storage battery, and a method for manufacturing a solar cell.

Document JP 2002 063942 A relates to a nonaqueous electrolyte secondary battery.

Document US 5 494 762 A relates to a non-aqueous electrolyte lithium secondary cell.

Document GB 1 603 154 A relates to electrochemical cells with solid electrolytes and electrodes.

Document WO 2013/146194 A1 relates to an electrode material for batteries, an electrode material paste for batteries, a method for manufacturing the electrode material for batteries, a dye-sensitized solar cell, and a storage battery.

Document JP 2011 142049 A relates to an electrode, a magnesium ion secondary battery, and a power system.

Document CN 101 834 290 A relates to a tungsten trioxide cathode material for a lithium ion battery and a preparation method thereof.

Document CN 103 936 074 A relates to a method for synthesizing superfine tungsten trioxide by use of a hydrothermal process.

Document CN 103 011 293 A relates to a synthesis method of tungsten trioxide.

Document JP 2010 280551 A relates to tungsten oxide fine particle and a method for producing the same.

Document CN 101 240 164 A relates to a method for synthesizing sensitive photochromic WO3 nano powder by formaldehyde inducement.

Document ADVANCED FUNCTIONAL MATERIALS, vol. 21, no. 12, 21 June 2011 (2011-06-21), pages 2175-2196, relates to properties, synthesis, and applications of nanostructured tungsten oxide.

Document CN 101 407 339 A relates to a method for synthesizing quadrangle tungsten oxide nano-powder.

Document WO 01/20695 A1 relates to an electrode composition including doped tungsten oxides and a method of preparation thereof.

Document CN 1 657 422 A relates to a device and a method for preparing nanometer tungsten trioxide powder using an ultrasonic spray microwave drying method.

### Summary of the Invention

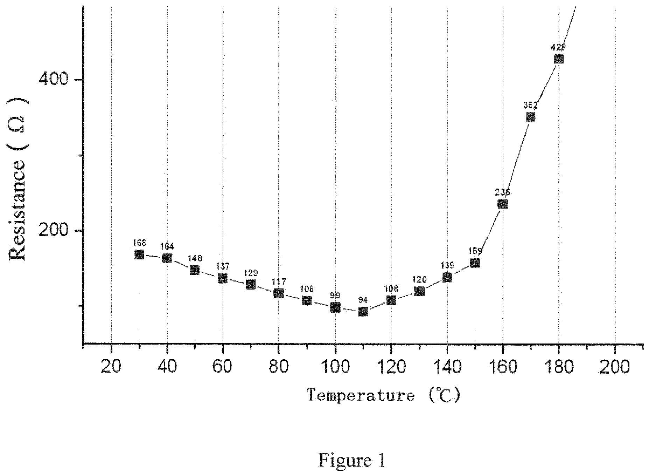

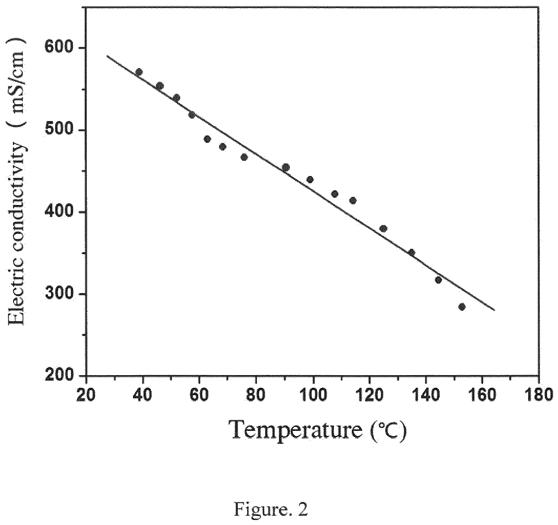

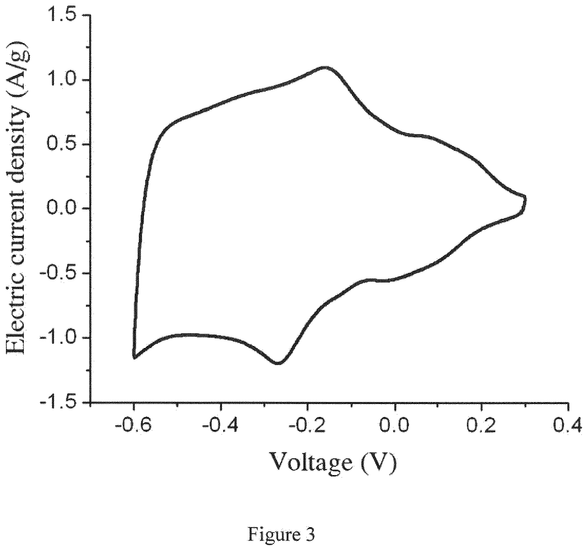

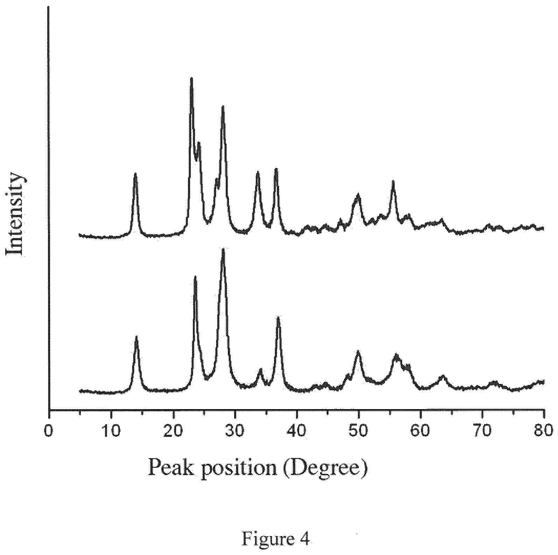

The object of the present invention is to provide a novel hybrid electron-proton conductive material, a method for producing the same, and an application thereof. Such materials are tungsten oxides having special properties. The method is to synthesize tungsten oxide material with special properties, and realize high proton conductivity; to realize high electron conductivity through simple cation doping. Such materials can be used as electrochemical energy storage materials, fuel cell catalyst materials and for many other applications.
The technical proposal of the invention is as follows:
A novel hybrid electron-proton conductive material for novel battery, its manufacturing method and applications, and the material has the following characteristics:
1) has a mixed electron-proton conductivity (Figure 1, 2);
2) has high redox activity (Figure 2);
3) has high thermal stability (Figure. 3);
4) has structural stability, and no obvious degradation after long-term use(Figure 4);

A possible preparation method comprises the steps of:
1) forming a solution or dispersion of tungsten-containing precursor material, wherein the concentration of the precursor material is 0.1% to 20% (mass%);
2) adding acid to adjust the pH value of the solution or the dispersion in step 1 to 1 to 3, and promoting acidification to form the intermediate;
3) transferring the intermediate to a hydrothermal reactor and heating to 90 to 200 ° C for 1 to 96 hours. The intermediate is dehydrated and precipitated to form the final product (tungsten trioxide hydrate).

Wherein, the precursor material can be sodium tungstate or ammonium tungstate.

The acid can be hydrochloric acid or sulfuric acid to adjust pH value of the precurors.

It should be noted that the present invention does not specifically limit the number of water contained in the hydrate, and the tungsten trioxide hydrate obtained by the above method is within the scope of the present application. Most preferably, however, the hydrate fraction is 0 to 1, i.e., WO₃•xH₂O, where x = 0-1.

It should be also noted that the precursor material may be any compound as long as it can obtain the tungsten element in the final product, but sodium tungstate and ammonium tungstate are particularly preferable. Here, the specific synthesis steps may be as follows:
1) introducing a tungsten-containing precursor material, such as ammonium tungstate, to form an ammonium tungstate solution or dispersion at a concentration of 0.1% to 20%;
2) adding acid, such as hydrochloric acid, sulfuric acid, etc., to adjust the solution pH to 1 to 3, to allow the formation of acidified intermediates;
3) transferring the intermediate to a hydrothermal reactor and heating to 90 to 200 ° C for 1 to 96 hours. The intermediate is dehydrated and precipitated to form the final product (tungsten trioxide hydrate).

In addition, the tungsten oxide prepared by the above-described method is subjected to a doping treatment with a hetero-element. That is, the doped tungsten oxide can be obtained by immersing the tungsten oxide in a salt solution containing different doping elements, separated by centrifugation and then heat-treated for a certain time at increased temperature. Wherein, the salt solution is 0.1 to 6 mol per liter of strontium oxide precursor solution, calcium oxide precursor solution, strontium chloride solution, calcium chloride solution, sodium chloride solution, chloroplatinic acid solution, palladium chloride solution, copper acetate solution; the treatment is conducted for a period of 4 to 8 hours and the temperature of the heat treatment is 200 to 800 ° C. It should be noted that the above-mentioned various solutions are merely for providing the hetero-elements in the final product, and therefore, the type of the solution used is not limited thereto, and the solutions herein are just a few examples.

In addition, the acidified intermediate is formed with an acidified tungsten-containing precursor material together with ammonium sulfate. The concentration of ammonium sulfate is 1% to 10%.

It should be noted that the ratio of the dopant element in the present application is not particularly limited, and any doped tungsten oxide or tungsten oxide hydrate prepared by the above method is within the scope of the present application.

Applications of the materials obtained by the methods of the present application include:
1) electrochemical energy storage materials;
2) fuel cell electrolytes and electrochemical catalyst materials.

As mentioned previously, the present application is directed to protecting a particular tungsten-containing material that can be obtained by the above-described method. This material has excellent properties as electrochemical energy storage materials as well as fuel cell electrolytes and electrochemical catalyst materials (to be described in detail below). Therefore, tungsten-containing materials obtained by the above process of the present invention, should be included in the scope of protection of the present application. However, for the sake of clarity, in the present invention, the tungsten-containing material includes tungsten oxide (WO₃) and tungsten oxide hydrate (WO₃ • xH₂O), doped tungsten oxide (MₓWO₃, M = Li, Na, K, Ca, Mg, Sr, Ba, etc.), doped tungsten oxide hydrate (MₓWO₃ • xH₂O, M = Li, Na, K, Ca, Mg, Sr, Ba, etc.), tungsten oxide composites (including tungsten with metals, metal oxides, carbon materials and polymers), tungsten oxide hydrate composites (including tungsten oxide hydrate and metal, metal oxides, carbon materials, polymers).

In the present invention, the tungsten oxide and tungsten oxide hydrate have high conductivity and rapid proton-proton capability.
The positive effect of the present invention is that:
1) The materials synthesis process is simple. For similar set-up, there have been widely used industrial devices and systems in the synthesis of a large number of chemical products; therefore it is easy for mass production;
2) The obtained active materials have high redox activity; can quickly precede electrochemical redox reaction to achieve a higher capacity and fast charge and discharge rate;
3) The obtained novel active material has high electron and proton conductivity, so as to realize high current charging and discharging performance;
4) The obtained material has stable structure; the structure does not change during the operation, providing good stability and the long-time cycle performance;
5) The active material can be used to construct highly efficient electrodes, can charge and discharge under a special voltage conditions, and providing a large operation voltage window when combined with a cathode;
6) The obtained active material has catalytic activity and can be used as an electrode catalyst.

### BRIEF DESCRIPTION OF THE DRAWINGS

Figure 1. shows the ionic conductivity of tungsten oxide materials, and temperature dependence of the proton conductivity of tungsten oxide material.
Figure 2. shows the electronic conductivity of the doped tungsten oxide material, and the temperature dependence of the electronic conductivity of the doped tungsten oxide material at 400 degrees Celsius.
Figure 3. Cyclic voltammogram of tungsten oxide material, and the high redox activity of the tungsten oxide material.
Figure 4. X-ray spectra of tungsten oxide materials obtained (or treated) at different temperatures, more specially shows x-ray patterns of tungsten oxide materials at room temperature (bottom) and after 400 ° C heat treatment.
Figure 5. shows the cyclic lifetime of the tungsten oxide material as an electrode, and more specially Figure 5 shows the stable charge and discharge cycle characteristics of the tungsten oxide material as an electrode.
Figure 6. Results of producing product 9 in catalytic partial oxidation of methane.

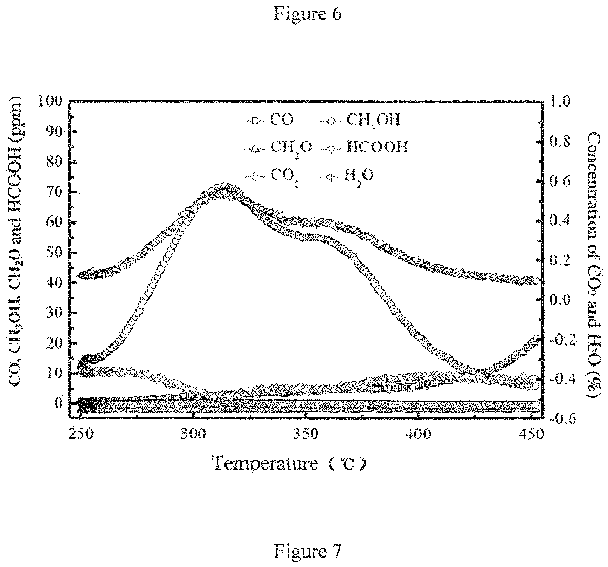

Figure 7. Results of producing product 10 in catalytic partial oxidation of methane.

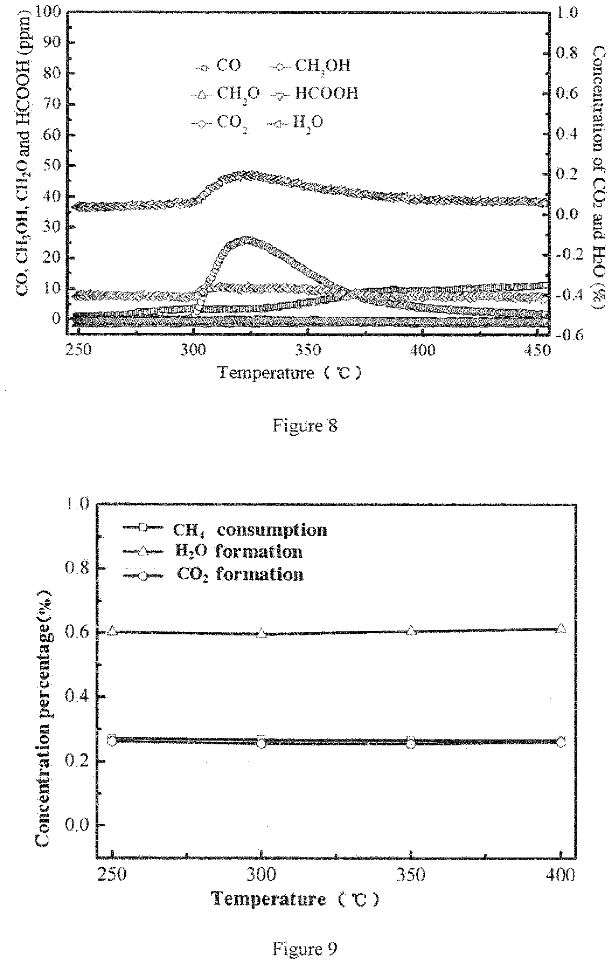

Figure 8. Results of producing product 11 in catalytic partial oxidation of methane.
Figure 9. Concentrations of H₂O and CO₂ related to producing product 9 by catalyzing the complete oxidation of methane

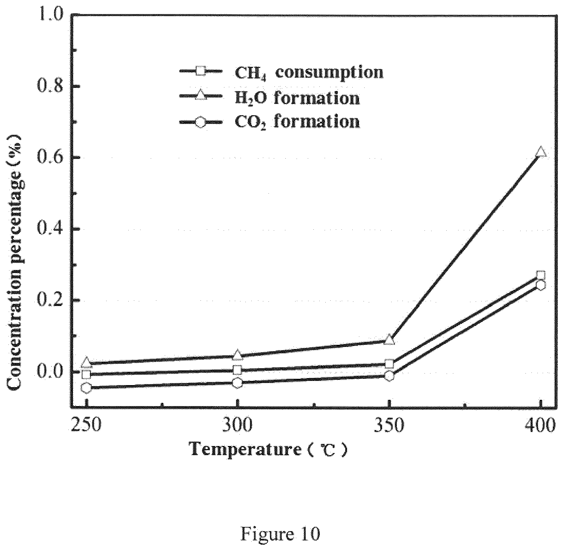

Figure 10. Concentrations of H₂O and CO₂ related to producing product 10 by catalyzing the complete oxidation of methane

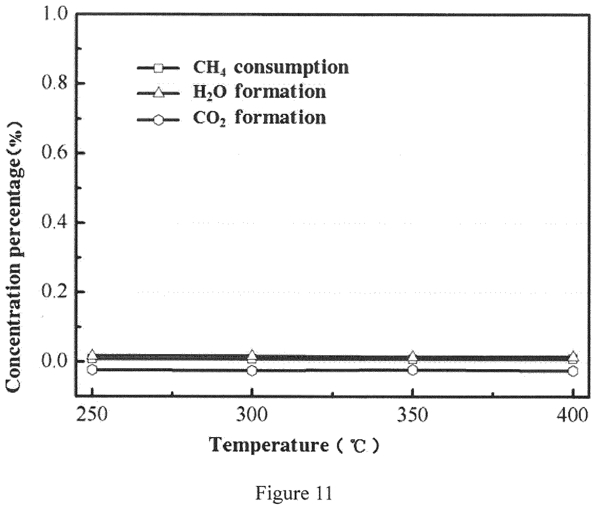

Figure 11. Concentrations of H₂O and CO₂ related to producing product 11 by catalyzing the complete oxidation of methane

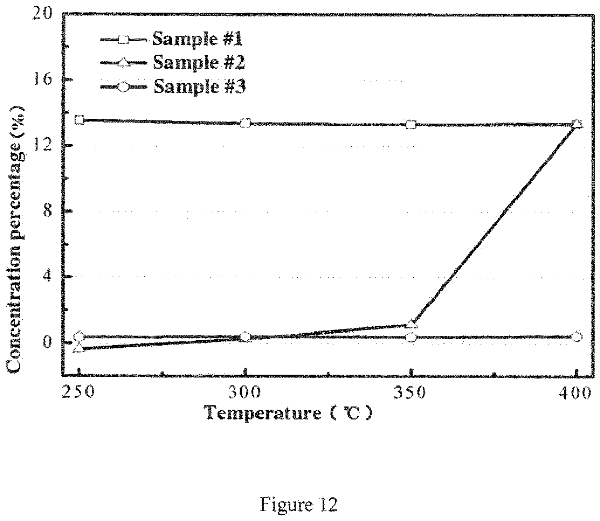

Figure 12. Conversion rate of methane oxidation at different temperatures for product 9-11 (Samples 1-3).

### Summary of the Invention

The advantages of the present invention will be further elucidated by way of specific examples, but the scope of the present invention is not limited to the following examples.

The reagents and starting materials used in the present invention are commercially available.

Firstly, tungsten oxide materials with above-mentioned special properties were synthesized by hydrothermal method, co-precipitation method, thermal decomposition method or spray drying method. For example, for the synthesis of tungsten oxide hydrate (WO₃ xH₂O), sodium tungstate or sodium tungstate hydrate is dissolved in deionized water to form a the homogeneous solution with concentration of 0.1% -20%, followed by adding sulfuric acid or hydrochloric acid; Then adding 1 to 10% of ammonium sulfate to form an intermediate; then the mixed solution is transferred into a reaction vessel to heat the reaction, reacting at a temperature of 90 to 200 degrees Celsius for 1 to 96 hours to obtain the product; after the reaction the reactor is cooled down, the product is washed and dried to obtain the tungsten oxide material.

### Specific Example 1 (electrochemical energy storage material)

(1) Sodium tungstate was used as a tungsten precursor material and dissolved in deionized water to form a homogeneous solution at a concentration of 5% by mass. An appropriate amount of hydrochloric acid was added to make the pH of the solution = 1.5. Then, 5% ammonium sulfate was added to form an intermediate, and the mixed solution was transferred to a reaction vessel for reaction at 160 ° C for 72 hours to finally obtain a tungsten trioxide material. The proton conductivity of tungsten oxide material is shown in Fig. 1, and its charge/discharge current density property is shown in Fig. 3, and the X-ray measurement data of the tungsten oxide material is shown in Fig 4.

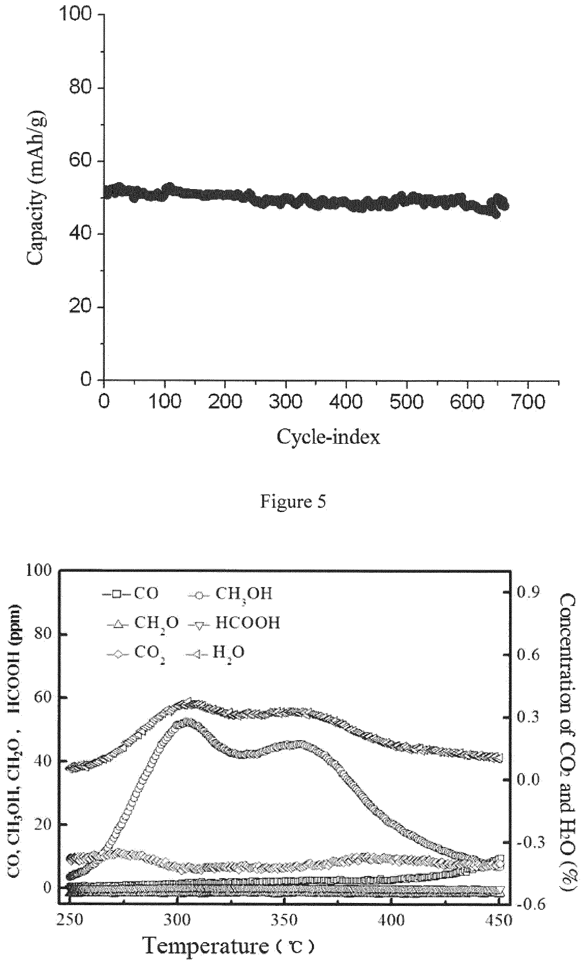

In addition, the obtained tungsten oxide was made into electrodes to explore the application and performance as electrochemical energy storage materials. In this embodiment, for example, in the case of electrochemical capacitor application, the tungsten oxide material can be configured as an electrode paste or in combination with a conductive material to form an electrode. In the present embodiment, specifically, the above-mentioned tungsten oxide is uniformly mixed with the conductive agent, the binder and the dispersion solvent in a certain mass ratio (8: 1: 1) to obtain an electrode paste, which is coated on the current collector, and dried for 10 hours to form an electrode. The obtained electrode was combined with the positive electrode, the glass fiber separator and the electrolyte (2 mol sulfuric acid) to form the initial cell. The battery was activated to obtain tungsten-acid battery with excellent performance. The obtained electrode was paired with a lead oxide electrode, separated by a separator, an acidic electrolyte was added to form a single cell, and electrochemical test was performed. The results are shown in Fig. 5, which shows that the synthesized tungsten oxide has high electrochemical redox active.

Besides the above specific methods, the inventors of the present application also obtained different types of tungsten materials and electrodes by the following ratios, all achieving similar properties to those of Example 1 (except for the parameters listed in Table 1, all other parameters are the same):

**Table 1. Preparation of tungsten oxide**

| | Tungsten precursor | Content (wt %) | pH | Content of ammonium sulfate (wt %) | Reaction temperature and time |
|---|---|---|---|---|---|
| Product 1 | ammonium tungstate | 0.5 | 2 | 1 | 90 °C, 5 hr |
| Product 2 | ammonium tungstate | 10 | 1 | 1 | 130 °C, 40 hr |
| Product 3 | sodium tungstate | 2 | 1.5 | 2 | 200 °C, 20 hr |
| Product 4 | sodium tungstate | 15 | 3 | 5 | 150 °C, 70 hr |
| Product 5 | sodium tungstate | 20 | 3 | 4 | 200 °C, 96 hr |

It should be noted that the tungsten oxide prepared by the above method may contain a hydrated tungsten oxide which depends on the reaction temperature and time, but the present application does not make any restriction to the number of hydrated water molecules contained in the oxides. Any tungsten oxide and/or tungsten oxide hydrate obtained by the above process is within the scope of the present application.

(2) Doped tungsten oxide can be obtained by soaking tungsten oxide in a salt solution of different doping elements, followed by centrifugation separation and heat treatment for a certain time.

Wherein, the salt solution is 0.1 to 6 mol per liter of the strontium chloride solution, or the calcium chloride solution; the time of heat treatment is 4-8 hours, and the temperature of the heat treatment is 200-800 degrees Celsius. Specific ratios are shown in Table 2:

**Table 2. Preparation of doped tungsten oxide**

| | **Tungsten oxide** | **Dopant oxide** | **content** | **Heat treatment temperature and time** |
|---|---|---|---|---|
| Product 6(Strontium doped tungsten oxide) | The tungsten oxide described in detail in Example 1, 1g | Strontium oxide | 1 mol/L | 400 °C, 6 hr |
| Product 7 (Calcium doped tungsten oxide) | The tungsten oxide described in detail in Example 1, 3 g | Calcium Oxide | 6 mol/L | 400 °C, 6 hr |
| Product 8 (Sodium doped tungsten oxide) | The tungsten oxide described in detail in Example 1, 2 g | Sodium chloride | 4 mol/L | 400 °C, 6 hr |

Among them, the electronic conductivity of the product 6 is measured, and the performance data is shown in Figure 2.

### Specific Example 2 (Fuel Cell Electrolyte and Chemical Catalyst Material)

(1) First, a tungsten oxide material (specifically, a tungsten oxide hydrate (WO₃ xH₂O)) was synthesized by dissolving sodium tungstate or sodium tungstate hydrate in deionized water to form a homogeneous solution having a concentration of 0.1 wt% 20 wt.% of tungsten salt, followed by adding the appropriate amount of sulfuric acid or hydrochloric acid to adjust the pH value to 1 to 3, so that the solution acidification; then adding 1 wt.% -10 wt.% of ammonium sulfate to form intermediates; the resulting mixed solution was transferred to a reactor. The reaction product is obtained at a temperature of 90 to 200 ° C for 1 to 96 hours. After the completion of the reaction, the product is cooled down, washed and dried to obtain a tungsten oxide material. In Table 3, the specific tungsten oxide material is the one described in specific example 1.
(2) Doped tungsten oxide can be obtained by reacting tungsten oxide with a salt solution of different dopant elements. In the specific examples, the ratios of chloroplatinic acid (H₂PtCl₆ 6H₂O), palladium chloride, copper acetate (monohydrate) (all these materials are commercially available), tungsten oxide, the above materials, and water are shown in Table 3:

**Table 3. Preparation of doped tungsten oxide**

| | **Tungsten oxide** | **Dopant salt** | **content** | **Heat treatment temperature and time** |
|---|---|---|---|---|
| Product 9 (Platinum doped tungsten oxide) | The tungsten oxide described in detail in Example 4g, | H₂PtCl₆·6H₂O | 4 mol/L | 250 °C, 3 hr |
| Product 10 (Palladium doped tungsten oxide) | The tungsten oxide described in detail in Example 4g, | PdCl₂ | 4 mol/L | 250 °C, 6 hr |
| Product 11 (Copper doped tungsten oxide) | The tungsten oxide described in detail in Example 4g, | Cu₂(OAc)₄(H₂O)₂ | 4 mol/L | 300 °C, 2 hr |

(3) Test conditions of the catalyst:
Test Condition 1: 0.1 g of product 9-11 was homogeneously mixed with 0.9 g of quartz sand and placed in a tubular reactor. Before the test, the sample was activated for 30 min at 250 °C in a 5% H₂ atmosphere. The total flow rate of the raw reaction gas was 500 mL/min; nitrogen was the balance gas; the methane content was 2% and the oxygen content was 0.5%. The heating rate was controlled at 10 °C/min, and the reaction temperature was raised from 250 °C to 450 °C. The products concentration of methane partial oxidation was monitored.
Test Condition 2: 0.1 g of product 9-11 was homogeneously mixed with 0.9 g of quartz sand and placed in a tubular reactor (internal diameter of about 4 mm). The sample was activated for 30 min at 250°C in a 5% H₂ atmosphere. The total flow rate of the feed gas was 210 mL/min, consisting of 200 mL/min of methane/nitrogen mixture with a methane content of 20% premixed with 10 mL / min of pure oxygen. The temperature of the feed gas was maintained for 30 min at 250, 300, 350 and 400 °C while flowing the raw reaction gas. The conversion rate of full methane oxidation reaction and amount of H₂O and CO₂ production were monitored.

(4) Comparison of catalytic performance
The catalytic oxidation of methane on the surface of the prepared catalyst was investigated. First, the methane molecules are adsorbed onto the active sites of the precious metal; then the electron and proton are transferred to the tungsten oxide carrier (WO₃) to form HWO₃ bronze; finally, the gas phase oxygen oxidizes HWO₃ bronze to produce WO₃ and water, and the methane can be partially oxidized and converted to methanol. By continuing to increase the amount of oxygen supply, methanol can be further oxidized, which is the complete oxidation of methane to generate CO₂ and water.

The conversion efficiency of methane partial oxidation was tested under test condition 1, and the catalytic performance of partial oxidation of methane can be quantitatively evaluated by comparing product 9, 10 and 11. Product 9-10 can catalyze partial oxidation of methane at 250 °C to efficiently convert methane to methanol and water, and maintain high methanol yield at low temperature (250 °C to 400 °C), showing excellent low temperature catalytic performance, while the product 10 exhibits only a limited catalytic activity at 300 °C or higher. When the temperature rose to above 400 °C, the main oxidation reaction of methane occurred on the product 9, 10 and 11 is full oxidation, which forms CO₂ and water as the products.

The conversion efficiencies of complete oxidation of methane were measured under test conditions 2 for product 9, 10 and 11, and the difference between CO₂ and water production was compared to quantify their efficiency difference. Product 9 can be highly efficiently catalytize oxidation reaction at 250 °C, all of the methane gases were completely oxidized to CO₂ and water. The product 10 only showed some complete oxidation catalytic activity at temperatures above 350 °C, and all methane can be completely oxidized at temperatures up to 400 °C, while product 11 did not show catalytic activity over the entire test temperature range, without CO₂ and water formation.

The oxidation conversion of methane at different temperatures was directly compared for the catalytic efficiency of products 9, 10 and 11. Product 9 can achieve 14% conversion rate at 250 °C, i.e. more than 70% of methane is effectively converted, and the conversion rate did not change significantly with the increase of reaction temperature. Product 10 did not undergo significant catalytic oxidation of methane below 350 °C until the temperature rose to 400 °C to achieve a similar conversion to product 9. Product 11 did not show an effective catalytic oxidation activity in the temperature range of 250-400 °C. It can be seen that using tungsten oxide as the support, an active metal components can be rationally chosen to prepare effective methane oxidation catalyst, and it can be also used for solid oxide fuel cell.

## Claims

1. A method for producing a doped tungsten oxide material, comprising the steps of:
1) forming a solution or dispersion of tungsten containing precursor material, wherein the concentration of the precursor material is from 0.1 wt.% to 20 wt.%;
2) adding acid to adjust the pH value of the solution or the dispersion to 1 to 3, and performing acidification to form an intermediate;
3) transferring the intermediate to a hydrothermal reaction vessel and heating to 90 to 200 °C for 1 to 96 hr to dehydrate the intermediate to form a tungsten oxide material; and
4) immersing the tungsten oxide material in a solution of different dopant elements, separating by centrifuging, and then heating for 4 to 8 hours at 200 to 800 °C to form the doped tungsten oxide material.

2. The method according to claim 1, wherein the precursor material is sodium tungstate and/or ammonium tungstate.

3. The method according to claim 1, wherein the acid used in step 2) is sulfuric acid and/or hydrochloric acid.

4. The method according to claim 1, wherein the solution of different dopant elements is a salt solution of different dopant elements.

5. The method according to claim 4, wherein the salt solution is selected from a solution of strontium oxide, a solution of calcium oxide, a solution of strontium chloride, a solution of calcium chloride, chloroplatinic acid solution, a palladium chloride solution or a copper acetate solution, the concentration of the salt solution being 0.1 to 6 moles per liter.

## Patentansprüche

1. Verfahren zur Herstellung eines dotierten Wolframoxidmaterials, umfassend die Schritte:
1) Bilden einer Lösung oder Dispersion von wolframhaltigem Vormaterial, wobei die Konzentration des Vormaterials 0,1 Gew.-% bis 20 Gew.-% ist;
2) Zugeben von Säure, um den pH-Wert der Lösung oder der Dispersion auf 1 bis 3 einzustellen, und Durchführen einer Ansäuerung, um ein Zwischenprodukt zu bilden;
3) Überführen des Zwischenprodukts in ein hydrothermales Reaktionsgefäß und Erwärmen auf 90 bis 200°C für 1 bis 96 Stunden, um das Zwischenprodukt zu dehydrieren, um ein Wolframoxidmaterial zu bilden; und
4) Eintauchen des Wolframoxidmaterials in eine Lösung verschiedener Dotierungselemente, Trennen durch Zentrifugieren, und dann Erhitzen für 4 bis 8 Stunden bei 200 bis 800°C, um das dotierte Wolframoxidmaterial zu bilden.

2. Verfahren nach Anspruch 1, wobei das Vormaterial Natriumwolframat und/oder Ammoniumwolframat ist.

3. Verfahren nach Anspruch 1, wobei die in Schritt 2) verwendete Säure Schwefelsäure und/oder Salzsäure ist.

4. Verfahren nach Anspruch 1, wobei die Lösung verschiedener Dotierungselemente eine Salzlösung verschiedener Dotierungselemente ist.

5. Verfahren nach Anspruch 4, wobei die Salzlösung ausgewählt ist aus einer Lösung von Strontiumoxid, einer Lösung von Calciumoxid, einer Lösung von Strontiumchlorid, einer Lösung von Calciumchlorid, Chlorplatinsäurelösung, einer Palladiumchloridlösung oder einer Kupferacetatlösung, wobei die Konzentration der Salzlösung 0,1 bis 6 Mol pro Liter ist.

## Revendications

1. Procédé de production d'un matériau d'oxyde de tungstène dopé, comprenant les étapes de :
1) formation d'une solution ou d'une dispersion de tungstène contenant un matériau précurseur, dans lequel la concentration du matériau précurseur est comprise entre 0,1 % en poids et 20 % en poids ;
2) ajout d'acide pour régler la valeur du pH de la solution de la dispersion entre 1 et 3, et réalisation de l'acidification afin de former un intermédiaire ;
3) le transfert de l'intermédiaire dans une cuve de réaction hydrothermique et le chauffage entre 90 et 200 °C pendant 1 à 96 heures afin de déshydrater l'intermédiaire pour former un matériau d'oxyde de tungstène ; et
4) immersion du matériau de tungstène dans une solution constituée de différents éléments dopants, la séparation par centrifugation et ensuite le chauffage pendant 4 à 8 heures entre 200 et 800 °C afin de former le matériau d'oxyde de tungstène dopé.

2. Procédé selon la revendication 1, dans lequel le matériau précurseur est du tungstate de sodium et/ou du tungstate d'ammonium.

3. Procédé selon la revendication 1, dans lequel l'acide utilisé dans l'étape 2) est l'acide sulfurique et/ou l'acide chlorhydrique.

4. Procédé selon la revendication 1, dans lequel la solution constituée de différents éléments dopants est une solution saline constituée de différents éléments dopants.

5. Procédé selon la revendication 4, dans lequel la solution saline est choisie parmi une solution d'oxyde de strontium, une solution d'oxyde de calcium, une solution de chlorure de strontium, une solution de chlorure de calcium, une solution d'acide chloroplatinique, une solution de chlorure de palladium ou une solution d'acétate de cuivre, la concentration de la solution saline étant comprise entre 0,1 et 6 moles par litre.
